# EUROPÄISCHE PATENTANMELDUNG

(11) **EP 4 664 254 A1**
(43) Veröffentlichungstag der Anmeldung: **17.12.2025**
(21) Anmeldenummer: 25181022.2
(22) Anmeldetag: 05.06.2025
(51) Int. Cl.: G06F 3/048, G06F 3/01

(54) **VERFAHREN ZUM ERZEUGEN EINER OPTIMIERTEN BILDSCHIRMTASTATUR FÜR EINE VORRICHTUNG, COMPUTERLESBARES SPEICHERMEDIUM UND VORRICHTUNG ZUR UNTERSTÜTZTEN KOMMUNIKATION**

(30) Priorität: 12.06.2024 DE 102024116477
(71) Anmelder: Curly Cube GmbH, 70180 Stuttgart (DE)
(72) Erfinder: Böger, Kolja, 40589 Düsseldorf (DE)
(74) Vertreter: Meissner Bolte Partnerschaft mbB

(57) **Zusammenfassung**

Die vorliegende Erfindung betrifft ein Verfahren zum Erzeugen einer optimierten Bildschirmtastatur für eine Vorrichtung (20), insbesondere Vorrichtung zur unterstützten Kommunikation, wobei die Vorrichtung dazu ausgebildet ist, eine Bildschirmtastatur (1) anzuzeigen, die durch einen Nutzer mittels Augensteuerung bedienbar ist, wobei das Verfahren die folgenden Schritte aufweist: (a) Anzeigen einer Bildschirmtastatur (1), die eine Vielzahl von Schaltflächen aufweist, auf der Vorrichtung (20); (b) Empfangen mindestens einer Benutzereingabe in Bezug auf die Bildschirmtastatur (1), insbesondere Fokussierung einer Schaltfläche mittels Augensteuerung; (c) Ermitteln von Kontextinformationen, zumindest basierend auf der Benutzereingabe; (d) Erzeugen einer modifizierten Bildschirmtastatur basierend auf den Kontextinformationen, wobei die modifizierte Bildschirmtastatur mindestens ein modifiziertes Informations- und/oder Aktionselement enthält, das in einem Fokusbereich des Nutzers angeordnet ist; und (e) Anzeigen der modifizierten Bildschirmtastatur auf der Vorrichtung (1). Es wird ferner ein computerlesbares Speichermedium angegeben, welches Instruktionen enthält, die mindestens einen Prozessor dazu veranlassen, das Verfahren zu implementieren, sowie eine entsprechende Vorrichtung, insbesondere zur unterstützten Kommunikation.

## Beschreibung

Die Erfindung betrifft ein Verfahren zum Erzeugen einer optimierten Bildschirmtastatur für eine Vorrichtung, insbesondere für eine Vorrichtung zur unterstützten Kommunikation. Ferner betrifft die Erfindung ein entsprechendes computerlesbares Speichermedium sowie eine entsprechende Vorrichtung.

Menschen, die durch umfassende motorische Einschränkungen am Sprechen und an Bewegungen gehindert sind (z.B. durch ALS oder infantile Zerebralparese), nutzten häufig spezielle Vorrichtungen zur unterstützten Kommunikation. Ein Beispiel für solche Vorrichtungen sind Sprachcomputer, die durch eine angeschlossene Eyetracking-Kamera die Blickposition des Anwenders auf einer Bildschirmtastatur erfassen und die Auswahl von Buchstaben durch längeres Fokussieren des Blicks auf der jeweiligen Schaltfläche ermöglichen.

Die aus dem Stand der Technik bekannten Vorrichtungen zur unterstützten Kommunikation sind jedoch in verschiedener Hinsicht verbesserungsbedürftig.

Zwar sind Sprachcomputer mit Bildschirmtastaturen bekannt, die vergrößerte Schaltflächen aufweisen, um die Eingabe für den Anwender erleichtern. Dennoch erreichen Anwender in der Regel nur ein geringes Eingabetempo und/oder eine hoher Fehlerhäufigkeit. Auch durch die nicht vollständig vermeidbare Ungenauigkeit bei der Erfassung der Blickposition durch Eyetracking-Kameras kann es zu Fehleingaben auf der Bildschirmtastatur kommen. Dies führt dazu, dass Anwender trotz Nutzung der Kommunikationshilfe häufig nicht oder nicht zufriedenstellend an Gesprächen teilnehmen können.

Es ist Aufgabe der vorliegenden Erfindung, ein Verfahren zum Erzeugen einer optimierten Bildschirmtastatur für eine Vorrichtung, insbesondere eine Vorrichtung zur unterstützten Kommunikation anzugeben. Insbesondere soll die optimierte Bildschirmtastatur eine höhere Eingabegeschwindigkeit bei der Bedienung mittels Eyetracking-Kamera der Vorrichtung ermöglichen. Ferner ist es Aufgabe, eine entsprechende Vorrichtung und ein computerlesbares Speichermedium anzugeben.

Diese Aufgabe wird durch ein Verfahren gemäß Anspruch 1, ein computerlesbares Speichermedium gemäß Anspruch 13 sowie durch eine Vorrichtung gemäß Anspruch 14 gelöst.

Insbesondere wird die Aufgabe gelöst durch ein Verfahren zum Erzeugen einer optimierten Bildschirmtastatur für eine Vorrichtung, insbesondere eine Vorrichtung zur unterstützten Kommunikation. Dabei ist die Vorrichtung dazu ausgebildet, eine Bildschirmtastatur anzuzeigen, die durch einen Nutzer mittels Augensteuerung bedienbar ist, und das Verfahren weist die folgenden Schritte auf:
a) Anzeigen einer Bildschirmtastatur, die eine Vielzahl von Schaltflächen aufweist, auf der Vorrichtung;
b) Empfangen mindestens einer Benutzereingabe in Bezug auf die Bildschirmtastatur, insbesondere Fokussierung einer Schaltfläche mittels Augensteuerung;
c) Ermitteln von Kontextinformationen, zumindest basierend auf der Benutzereingabe;
d) Erzeugen einer modifizierten Bildschirmtastatur basierend auf den Kontextinformationen,
   wobei die modifizierte Bildschirmtastatur mindestens ein modifiziertes Informations- und/oder Aktionselement enthält, das in einem Fokusbereich des Nutzers angeordnet ist; und
e) Anzeigen der modifizierten Bildschirmtastatur auf der Vorrichtung.

Generell ermöglicht das erfindungsgemäße Verfahren, basierend auf einer Benutzereingabe (beispielsweise der Fokussierung einer Schaltfläche mittels Augensteuerung) und Kontextinformationen, die basierend auf der Benutzereingabe ermittelt werden (beispielsweise einer Liste von vorherigen Benutzereingaben), eine modifizierte Bildschirmtastatur anzugeben, welche dem Benutzer den Eingabevorgang erleichtert.

Die modifizierte Bildschirmtastatur enthält dabei mindestens ein Informations- und/oder Aktionselement. Ein Informationselement kann beispielsweise ein grafisches Element sein, welches ein Wort, ein Symbol oder dergleichen enthält. Ein Aktionselement kann beispielsweise eine Schaltfläche sein, die der Anwender ebenso wie die anderen Schaltflächen anwählen kann, etwa durch Fokussierung. Ein Informations- und Aktionselement kann dementsprechend insbesondere eine Schaltfläche sein, auf der eine Information dargestellt ist und bei Auslösung eine entsprechende Aktion auslöst, beispielsweise die Eingabe eines auf der Schaltfläche angezeigten Vorschlags zur Wortvervollständigung. Das Informations- und/oder Aktionselement kann auch eine modifizierte Schaltfläche sein, beispielsweise eine Schaltfläche für einen Buchstaben, auf der zusätzlich ein Wortvorschlag dargestellt ist.

Ein wesentlicher Aspekt des erfindungsgemäßen Verfahrens besteht darin, dass das mindestens eine Informations- und/oder Aktionselement in einem Fokusbereich des Nutzers angeordnet ist. Als Fokusbereich kann dabei ein Bereich auf dem Bildschirm der Vorrichtung, insbesondere auf der darauf angezeigten Bildschirmtastatur, aufgefasst werden, auf den der Anwender während des laufenden Eingabeprozess seinen Blick fokussiert. Insbesondere kann bei der Eingabe von Buchstaben auf einer Bildschirmtastatur der Fokusbereich des Anwenders auf der jeweiligen Schaltfläche liegen, die der Anwender im Moment fokussiert, um das Wort fortzusetzen. Elemente außerhalb des Fokusbereichs nimmt der Anwender dabei nicht oder zumindest nur sehr begrenzt wahr (foveales Sehen). Mit anderen Worten, während des Eingabevorgangs nimmt der Anwender im Wesentlichen einen Ausschnitt (Fokusbereich) der Bildschirmtastatur wahr, das sich von Schaltfläche zu Schaltfläche entsprechend dem einzugebenden Wort bewegt.

Die Vorteile des zuvor beschriebenen erfindungsgemäßen Ansatzes werden besonders im Vergleich mit herkömmlichen Bildschirmtastaturen ersichtlich, bei denen Wortvorschläge beispielsweise oberhalb der Bildschirmtastatur angeordnet sind. Indem das Informations- und/oder Aktionselement erfindungsgemäß in dem Bereich angeordnet ist, wo der Anwender ohnehin hinschaut (d.h. im Fokusbereich),
- nimmt der Anwender das zusätzliche Element intuitiv im Eingabeprozess unvermeidlich wahr, ohne, dass er die Bildschirmfläche extra danach absuchen muss;
- kann der Anwender (im Falle eines Aktionselements) das zusätzliche Element im Fokusbereich direkt auslösen, ohne, den Blick vom Fokusbereich abzuwenden, um eine separate Schaltfläche zu betätigen;
- wird die Wahrscheinlichkeit minimiert, dass der Anwender von dem zusätzlichen Element keinen Gebrauch macht, da er es aufgrund seines "Tunnelblicks" übersieht.

Die auf diese Weise erzeugte optimierte Bildschirmtastatur ermöglicht eine komfortable und intuitive Bedienung einer Vorrichtung per Augensteuerung, die auf die Eigenheiten der menschlichen Wahrnehmung ausgelegt ist. Dabei kann eine hohe Eingabegeschwindigkeit und geringe Fehlerquote erzielt werden.

Im praktischen Einsatz des erfindungsgemäßen Verfahrens wurden von Anwendern und Fachleuten eine mehr als 1,5-fach höhere Kommunikationsgeschwindigkeit und lebhaftere Gesprächsbeteiligung bestätigt.

In einer Ausführungsform umfasst Schritt c), d.h. das Ermitteln von Kontextinformationen, ein Auswerten eines Eingabepräfixes, der durch eine Sequenz von vorherigen Benutzereingaben und der (aktuellen) Benutzereingabe angegeben ist. Dabei umfasst Schritt d) die folgenden Schritte:
- Erzeugen von mindestens einem Wortvorschlag basierend auf dem Eingabepräfix;
- Zuordnen des mindestens einen Wortvorschlags zu einer Schaltfläche der Bildschirmtastatur, wobei die Schaltfläche einen Folgebuchstaben in Bezug auf den Eingabepräfix und den Wortvorschlag repräsentiert.

Dabei wird in Schritt d) der mindestens eine Wortvorschlag als Informations- und Aktionselement innerhalb der zugeordneten Schaltfläche dargestellt.

Gemäß dieser Ausführungsform stellt der Eingabepräfix als Liste von vorherigen Benutzereingaben inkl. der aktuellen Benutzereingabe Kontextinformationen dar, die zur Erzeugung der modifizierten Bildschirmtastatur verwendet werden.

Der Eingabepräfix kann dabei insbesondere eine Sequenz von Benutzereingaben seit einem letzten Leer- oder Satzzeichen sein, die mit einem Buchstaben beginnt. Alternativ kann der Eingabepräfix aber auch mit einem anderen Zeichen, insbesondere einem Leer- oder Satzzeichen beginnen.

Beispielsweise kann nach Eingabe der Buchstaben "he", die einen Eingabepräfix (genauer: Wortpräfix) in Bezug auf das Wort "heute" bilden, ein entsprechender Wortvorschlag "heute" ermittelt werden und der Schaltfläche des Folgebuchstabens "u" angezeigt werden. Unter einem Folgebuchstaben kann dabei derjenige Buchstabe verstandet werden, der im Wortvorschlag unmittelbar nach dem Eingabepräfix steht.

Indem der Wortvorschlag innerhalb der Schaltfläche des Folgebuchstabens angezeigt wird, wird der Anwender den Wortvorschlag unvermeidlich wahrnehmen, da sein Blick nach Eingabe des letzten Zeichens des Wortpräfixes intuitiv auf den Folgebuchstaben wandert, um die Eingabe des Wortes fortzusetzen.

Vorzugsweise wird eine Vielzahl von Wortvervollständigungen erzeugt, beispielsweise Wortvorschläge für bis zu acht unterschiedliche Folgebuchstaben. In der modifizierten Bildschirmtastatur können diese Folgebuchstaben dabei farblich hervorgehoben sein.

Darüber hinaus können diejenigen Folgebuchstaben, die einem Wortvorschlag zugeordnet sind, in der modifizierten Bildschirmtastatur mittels Augensteuerung über eine kürzere Verweildauer ausgelöst werden als andere Schaltflächen bzw. Buchstaben der Bildschirmtastatur. Auf diese Weise kann der Anwender die Wortvorschläge im Eingabeprozess schnell und einfach annehmen, da nur ein vergleichsweise kurzes Fokussieren der Folgebuchstaben-Schaltfläche erforderlich ist. Dies steigert die Eingabegeschwindigkeit und erleichtert die Bedienung mittels Augensteuerung.

In einer weiteren Ausführungsform umfasst Schritt c), d.h. das Ermitteln von Kontextinformationen, die folgenden Schritte:
c1) Auswerten eines Wortstamms basierend auf einer Sequenz von vorherigen Benutzereingaben;
c2) Erzeugen von mindestens einem Wortvorschlag, der eine Flexion des Wortstamms angibt, insbesondere hinsichtlich Person, Modus und/oder Genus;
c3) Zuordnen des mindestens einen Wortvorschlags zu einer Schaltfläche der Bildschirmtastatur,
   wobei die Schaltfläche einen letzten oder vorletzten Buchstaben des Wortvorschlags repräsentiert.

Dabei wird in Schritt d) der mindestens eine Wortvorschlag innerhalb der zugeordneten Schaltfläche dargestellt.

Diese Ausführungsform erleichtert die Eingabe von spezifischen Flexionen von Wörtern (z.B. Verben, Adjektive, Pronomen), indem zu einem Wortstamm gehörigen Flexionen generiert und als Wortvorschläge in einer zugeordneten Schaltfläche angezeigt werden. Auf diese Weise ist es nicht erforderlich, einen Wortvorschlag der Grundform (z.B. "können") zu akzeptieren und manuell zur gewünschten Flexion zu korrigieren (z.B. "könntest").

Die den Flexionen entsprechenden Wortvervollständigungen werden dabei, anders als in der vorhergehenden Ausführungsform, nicht im Folgebuchstaben, sondern in einem vorletzten oder letzten Buchstaben der Wortvervollständigung angezeigt. In der deutschen Sprache können Anwender Flexionen meist über ihren letzten oder vorletzten Buchstaben gut assoziieren. Dies erlaubt dem Anwender, die gewünschte Flexion auf der modifizierten Bildschirmtastatur schnell und intuitiv aufzufinden, da die Flexion im Wesentlichen durch den jeweils letzten oder vorletzten Buchstaben gekennzeichnet ist, insbesondere durch Buchstaben wie "s", "n", "e", "t", "r" oder "m". Diese Buchstaben charakterisieren die jeweiligen Flexionen in der deutschen Sprache.

Auch gemäß dieser Ausführungsform können die Schaltflächen, welche die entsprechenden Wortvorschläge enthalten, farblich markiert sein und/oder eine kürzere Verweildauer aufweisen, so, wie es oben im Zusammenhang mit der vorherigen Ausführungsform beschrieben ist. Insbesondere können alle Schaltflächen, die Flexionen als Wortvorschläge enthalten, eine bestimmte Farbe (z.B. grün) aufweisen, die sich von der Farbe von Schaltflächen ohne Wortvorschlag und Schaltflächen mit Wortvorschlägen, die keine Flexion angeben, unterscheidet. Auf diese Weise kann der Anwender die unterschiedlichen Flexions-Wortvorschläge einfach als Gruppe von Alternativen identifizieren, aus der er eine Flexion auswählen kann.

In einer weiteren Ausführungsform umfasst das Verfahren ferner die folgenden Schritte:
- Erfassen, dass der Nutzer mittels Augensteuerung eine Schaltfläche fokussiert, in welcher ein Wortvorschlag angezeigt wird;
- Bereitstellen einer Vervollständigungs-Schaltfläche in der modifizierten Bildschirmtastatur, bevorzugt in einem unteren Bereich davon,
   wobei die Vervollständigungs-Schaltfläche den Wortvorschlag darstellt und dazu ausgebildet ist, bei Auswahl den Wortvorschlag zu akzeptieren.

Diese Ausführungsform erlaubt, dass der Anwender einen gewünschten Wortvorschlag, der beispielsweise innerhalb einer Buchstaben-Schaltfläche angezeigt wird, auf einfache Weise und schnell annehmen kann, indem er seine Blickposition auf die separate Vervollständigungs-Schaltfläche richtet.

Die Anordnung der Vervollständigungs-Schaltfläche im unteren Bereich der modifizierten Bildschirmtastatur ist dabei vorteilhaft, da die Augenbewegung für einen "Blick-Sprung" nach unten physisch einfacher und schneller möglich ist, als andere Bewegungen. Alternativ kann die Schaltfläche aber auch in einem anderen Bereich der modifizierten Bildschirmtastatur angeordnet sein, der für den Anwender einfach erreichbar ist.

In einer weiteren Ausführungsform ist das Verfahren dadurch gekennzeichnet, dass
- eine Vielzahl von Wortvorschlägen erzeugt wird;
- das Verfahren ferner ein Ermitteln einer Priorität des jeweiligen Wortvorschlags umfasst; und
- in einer jeweiligen Schaltfläche, in der ein Wortvorschlag angezeigt wird, derjenige Wortvorschlag angezeigt wird, der die höchste Priorität unter allen Wortvorschlägen besitzt, die der Schaltfläche zugeordnet sind.

Diese Ausführungsform begegnet somit dem Problem, dass im Allgemeinen mehr Wortvorschläge ermittelt werden können, als auf einer Bildschirmtastatur angezeigt werden können, insbesondere dann, wenn die Wortvorschläge - wie oben erläutert - jeweiligen Folgebuchstaben zugeordnet sind und innerhalb deren Schaltflächen angezeigt werden sollen. Indem gemäß dieser Ausführungsform Wortvorschläge priorisiert werden, kann innerhalb der Schaltflächen derjenige Wortvorschlag angezeigt werden, der erwartungsgemäß am hilfreichsten für den Anwender im aktuellen Kontext ist.

Dabei kann die Priorität eines Wortvorschlags insbesondere abhängig von einer Verwendungshäufigkeit in einer Sprache ermittelt werden, wobei die Verwendungshäufigkeiten der jeweiligen Wortvorschläge in einer Datenbank hinterlegt sein können, und das Verfahren das Abfragen von einer Verwendungshäufigkeit aus der Datenbank umfasst. Alternativ oder zusätzlich kann die Datenbank die nutzerspezifischen Verwendungshäufigkeiten enthalten, d.h. Verwendungshäufigkeiten, die anhand bisheriger Eingaben des Anwenders ermittelt worden sind.

Alternativ oder zusätzlich kann die Priorität anhand einer Gesprächssituation ermittelt werden, wobei das Verfahren zur Identifizierung einer Gesprächssituation beispielsweise Ton-, Bild- und/oder Positionsdaten von entsprechenden Sensoren erfasst und in eine von mehreren Gesprächssituationen klassifiziert. Den Worten bzw. Wortvorschlägen können dabei für jede der Gesprächssituationen jeweilige Prioritäten zugeordnet sein.

Alternativ oder zusätzlich kann die Wortlänge im Priorisierungsfaktor berücksichtigt werden. Beispielsweise können kurze Wörter gegenüber längeren Wörtern bevorzugt werden, um einen Eingabeprozess zu erleichtern, bei dem zunächst die Wortvervollständigung eines kurzen Wortes gewählt wird, und anschließend einzelne Buchstaben ergänzt werden. Ein solcher Eingabevorgang kann die Eingabe gegenüber einer Situation erleichtern, in der eine Wortvervollständigung eines langen Wortes akzeptiert wird, von dessen Ende einzelne Buchstaben entfernt werden müssen.

Es versteht sich von selbst, dass eine Priorität des Wortvorschlags basierend auf den vorgenannten Prioritätskriterien einzeln, oder auch einer Kombination der Prioritätskriterien festgelegt sein kann. Hierzu können den einzelnen Prioritätskriterien an sich Gewichtungsfaktoren zugeordnet sein.

In einer weiteren Ausführungsform ist das Verfahren dadurch gekennzeichnet, dass die Benutzereingabe das Fokussieren einer Löschen-Schaltfläche umfasst, und das Verfahren ferner die folgenden Schritte umfasst:
- Ermitteln eines Wortes, das bei anhaltendem Fokussieren der Löschen-Schaltfläche zumindest teilweise gelöscht werden wird; und
- Anzeigen des Wortes innerhalb der Löschen-Schaltfläche.

Bei der Eingabe von Text mittels einer Bildschirmtastatur wird die Löschen-Schaltfläche dazu genutzt, einzelne Zeichen oder Wörter am Ende des eingegebenen Textes zu löschen. Hierbei wird die Löschen-Schaltfläche vom Anwender so oft ausgelöst, bis die gewünschten Zeichen oder Worte entfernt worden.

Gemäß der oben beschriebenen Ausführungsform wird dem Anwender das Wort, dessen Buchstaben durch das momentane Fokussieren der Löschen-Schaltfläche gelöscht werden, innerhalb der Löschen-Schaltfläche angezeigt. Somit wird dem Anwender genau die Information, die er für seine Entscheidung benötigt, ob die Löschen-Schaltfläche weiterhin betätigt werden soll, innerhalb seines aktuellen Fokusbereichs angezeigt, d.h. innerhalb der Löschen-Schaltfläche selbst. Insbesondere ist es für den Anwender nicht erforderlich, seine Blickposition von der Löschen-Schaltfläche abzuwenden und auf ein Textfeld zu richten, um zu prüfen, ob bereits ausreichend viele Zeichen gelöscht worden ist.

In einer weiteren Ausführungsform umfasst Schritt c), d.h. das Ermitteln von Kontextinformationen, ferner die folgenden Schritte:
- Erfassen von Umgebungsdaten, insbesondere Sprach-, Bild- und/oder Positionsdaten, von mindestens einem Sensor;
- Zuordnen der Umgebungsdaten zu mindestens einer Umgebung, insbesondere Gesprächskontext, Gesprächspartner und/oder Standort.

Dabei umfasst Schritt d) das Modifizieren mindestens einer Schaltfläche basierend auf den Umgebungsdaten.

Gerade unter Nutzern von Vorrichtungen zur unterstützten Kommunikation ist es wünschenswert, schnell Wortvorschläge nutzen zu können, die sie in der konkreten Gesprächssituation benötigen. Das Sprachverhalten, insbesondere hinsichtlich der Verwendungshäufigkeit bestimmter Worte, wird dabei regelmäßig von der konkreten Gesprächssituation bestimmt. Beispielsweise kommt für typische Gesprächssituationen auf der Arbeit oder in der Schule regelmäßig ein anderer Wortschatz zum Einsatz als in privaten Unterhaltungen. Auch bei privaten Unterhaltungen kann der Unterhaltungsstil und damit die häufig verwendeten Wörter je nach Unterhaltungspartner unterschiedlich sein.

Gemäß der obigen Ausführungsform werden Umgebungsdaten erfasst und in eine von mehreren vordefinierten Umgebungen klassifiziert, um eine modifizierte Bildschirmtastatur mit kontextabhängigen Wortvorschlägen zu erzeugen. Dies kann beispielsweise erfolgen, indem
- Tondaten erfasst werden und per Spracherkennung letzte gesprochene Äußerungen aus einem aktuellen Gespräch analysiert werden;
- Bilddaten erfasst werden und eine Gesichtserkennung ausgeführt wird, um Unterhaltungspartner zu identifizieren;
- Positionsdaten, z.B. GPS-Daten, erfasst werden, um einen Standort des Anwenders zu identifizieren;
- Wörter und Äußerungen erfasst werden, die auf einen aktuellen Standort hindeuten (z.B. Arbeitsplatz, Arzt, zuhause).

Insbesondere können basierend auf der Klassifizierung der Umgebung, wie bereits zuvor im Zusammenhang mit der entsprechenden Ausführungsform beschrieben, Prioritäten oder Verwendungshäufigkeiten von Wortvorschlägen festgelegt werden.

In einer weiteren Ausführungsform wird mindestens ein Sprachmodell, insbesondere ein Large Language Model (LLM), zum
- Zuordnen der Umgebungsdaten zu mindestens einer Umgebung; und/oder
- Erzeugen von Wortvorschlägen, insbesondere basierend auf der Umgebung,
verwendet.

Das mindestens eine LLM kann somit insbesondere dazu eingesetzt werden, Wortvorschläge zu erzeugen, die dem Anwender in der modifizierten Bildschirmtastatur bereitgestellt werden. Ebenfalls kann eine Folge zusammengehöriger Wortvorschläge erzeugt werden, die einen vollständigen Satz bilden.

Durch die Verwendung eines LLMs kann die Qualität bzw. Anwendbarkeit der erzeugten Vorschläge für den Anwender weiter optimiert werden, sodass beispielsweise
- zum Thema des aktuellen Gesprächs passende Wörter,
- Antworten auf Äußerungen und Fragen der Gesprächspartner,
- Wörter und Äußerungen, die sich auf Themen beziehen, die mit anwesenden Personen in der Vergangenheit besprochen wurden
erzeugt und in der erfindungsgemäß erzeugten modifizierten Bildschirmtastatur bereitgestellt werden.

Hierzu können beispielsweise die wie oben beschriebenen Ton- und/oder Bilddaten zunächst in Textdaten umgewandelt werden, und anschließend durch das LLM verarbeitet werden.

In einer möglichen Umsetzung wird hierbei ein einziges LLM verwendet, welches dazu ausgebildet ist, Wortvorschläge basierend auf Umgebungsdaten zu liefern.

In einer anderen möglichen Umsetzung können hierbei zwei LLMs verwendet werden, wobei ein erstes LLM dazu ausgebildet ist, die erfassten Umgebungsdaten in eine (abstrakte) Umgebung (z.B. Schule, Arbeit, persönliches Gespräch, etc.) zu klassifizieren, und ein zweites LLM dazu ausgebildet ist, basierend auf der Umgebung entsprechende Wortvorschläge zu erzeugen.

In einer weiteren Ausführungsform umfasst Schritt c) ein Erfassen einer Verweildauer auf einer ersten Schaltfläche, und das Verfahren umfasst ferner die folgenden Schritte:
- Ermitteln, ob die Verweildauer einen Vorauswahl-Schwellenwert überschreitet;
- falls die Verweildauer den Vorauswahl-Schwellenwert überschreitet, Erzeugen der modifizierten Bildschirmtastatur derart, dass diese eine zweite Schaltfläche enthält, wobei die zweite Schaltfläche dazu konfiguriert ist, eine Aktion auszulösen, die mit der ersten Schaltfläche assoziiert ist, insbesondere die Eingabe eines Buchstabens, der auf der ersten Schaltfläche dargestellt ist.

Dabei ist die zweite Schaltfläche ist größer, vorzugsweise mindestens zwei Mal so groß, wie die erste Schaltfläche, und ist vorzugsweise in einem unteren Bereich der modifizierten Bildschirmtastatur angeordnet. Die Anordnung der zweiten Schaltfläche im unteren Bereich der modifizierten Bildschirmtastatur ist dabei vorteilhaft, da die Augenbewegung für einen "Blick-Sprung" nach unten physisch einfacher und schneller möglich ist als andere Bewegungen. Alternativ kann die zweite Schaltfläche aber auch in einem anderen Bereich der modifizierten Bildschirmtastatur angeordnet sein, der für den Anwender einfach erreichbar ist.

Während ein Augensteuerungs-Bedienkonzept, bei dem eine Schaltfläche ausgelöst wird, sobald die Verweildauer auf der Schaltfläche einen Auslösungs-Schwellenwert (z.B. 1 Sekunde) überschreitet, gut geeignet ist für Anwender, die ihre Blickposition vergleichsweise gut kontrollieren können, ist dies für andere Anwendergruppen mit Schwierigkeiten verbunden. Dies betrifft insbesondere Anwender, deren Blickposition instabil ist, beispielsweise wegen ungewollten Kopfbewegungen aufgrund einer Zerebralparese, und daher oft vor Ablauf des Auslösungs-Schwellenwerts von der anvisierten Schaltfläche ungewollt wegwandert. Eine Reduzierung des Auslösungs-Schwellenwerts (z.B. auf 300 ms) würde hingegen zu ungewollten Auslösungen führen.

Die oben beschriebene Ausführungsform erlaubt, eine der Schaltflächen der Bildschirmtastatur ("erste Schaltfläche") zur Auslösung vorauszuwählen, indem die Blickposition für die Länge einer Verweildauer, die einen Vorauswahl-Schwellenwert überschreitet, auf der Schaltfläche gehalten wird. Der Vorauswahl-Schwellenwert kann dabei insbesondere vergleichsweise kurz festgelegt sein, beispielsweise 100ms bis 500ms, und geringer sein als ein Auslösungs-Schwellenwert wie oben beschrieben.

Nach Fokussierung einer Schaltfläche für mindestens die Dauer des Vorauswahl-Schwellenwerts (d.h. nach der "Vorauswahl") wird gemäß der beschriebenen Ausführungsform in der modifizierten Bildschirmtastatur eine zweite, größere Schaltfläche bereitgestellt (beispielsweise in einem unteren Bildschirmbereich), die dazu konfiguriert ist, eine Aktion auszulösen, die mit der ersten Schaltfläche assoziiert ist. Beispielsweise kann das Auslösen der zweiten Schaltfläche die Eingabe eines Buchstabens bewirken, der auf der ersten Schaltfläche dargestellt ist. Anwender können also die Aktion der vorausgewählten Schaltfläche ("erste Schaltfläche") dadurch herbeiführen, dass sie die zweite, größere Schaltfläche mittels Augensteuerung auslösen, was aufgrund ihrer größeren Abmessungen leichter fällt.

Insbesondere kann die modifizierte Bildschirmtastatur für einen Betriebsmodus eingerichtet sein, bei der das alleinige Fokussieren von Buchstaben-Schaltflächen und/oder anderen Schaltflächen nicht direkt zu der üblichen Aktion (z.B. Eingabe des Buchstabens) führt, sondern lediglich zu einer Vorauswahl des Buchstabens und zur Anzeige der zweiten Schaltfläche, sodass die Aktion durch Auslösen der zweiten Schaltfläche ausgelöst werden kann, wie oben beschrieben.

Die beschriebene Ausführungsform erleichtert somit die Bedienbarkeit der Bildschirmtastatur, insbesondere für die oben beschriebene Anwendergruppe, und reduziert das Risiko von Fehleingaben.

In einer weiteren Ausführungsform werden eine oder mehrere Schaltflächen der Bildschirmtastatur und der modifizierten Bildschirmtastatur durch Fokussierung eines jeweiligen Bereichs (im Folgenden: "Hitbox") ausgelöst. Die Hitbox ist dabei größer als eine sichtbare Begrenzung der Schaltfläche sein und umgibt die sichtbare Begrenzung der Schaltfläche (ohne, dass sie auf der Bildschirmtastatur sichtbar ist). Insbesondere können alle Schaltflächen der Bildschirmtastatur und der modifizierten Bildschirmtastatur eine solche ihnen zugeordnete Hitbox besitzen.

Diese Ausführungsform ermöglicht somit, dass eine Schaltfläche auch dann ausgelöst wird, wenn die Blickposition des Anwenders außerhalb der sichtbaren Begrenzung der Schaltfläche liegt, solange sie sich innerhalb der Hitbox befindet. Gerade für Anwender, die Schwierigkeiten haben, ihre Blickposition präzise zu kontrollieren, kann diese Ausführungsform daher den Eingabevorgang erleichtern.

Die Größe und/oder die Position der Hitboxkann dabei insbesondere basierend auf Kontextinformationen festgelegt werden, insbesondere einer Umgebung, Gesprächssituation oder vorherigen Benutzereingaben. Beispielsweise kann die Hitbox einer Schaltfläche auf einen Wert größer als ein Standardwert festgelegt werden, wenn sich aus den Kontextinformationen ergibt, dass der Anwender mit hoher Wahrscheinlichkeit diese Schaltfläche anwählen wird.

In einer weiteren Ausführungsform umfasst das Verfahren ferner die folgenden Schritte:
- Erfassen einer Geschwindigkeit, mit welcher sich eine Blickposition des Nutzers über die Bildschirmtastatur bewegt;
- Ändern einer Auslöseschwelle mindestens einer Schaltfläche der modifizierten Bildschirmtastatur basierend auf der Geschwindigkeit, wobei die Auslöseschwelle eine Zeit angibt, für die die Schaltfläche mindestens fokussiert werden muss, um ausgelöst zu werden.

Mit anderen Worten wird gemäß dieser Ausführungsform eine Geschwindigkeit, mit welcher sich der Blick des Nutzers über den Bildschirm der Vorrichtung bzw. die Bildschirmtastatur bewegt, als Kontextinformation erfasst. In der modifizierten Bildschirmtastatur sind jeweilige Auslöseschwellen von einer oder mehreren Schaltflächen in Abhängigkeit von der erfassten Geschwindigkeit festgelegt.

Mit diesem Ansatz ist es insbesondere möglich, Schaltflächen zu deaktivieren, solange die Eingabegeschwindigkeit (zu) hoch ist, und die Schaltflächen erst zu aktivieren, wenn die Eingabegeschwindigkeit in einem zulässigen Bereich liegt, wobei die Schaltflächen dann wie üblich über Fokussieren für eine vorgegebene Verweildauer angewählt werden können. Die Schaltfläche kann dabei umrandet markiert werden, sobald die Verweildauer beginnt, zu laufen.

Das obige Verhalten kann durch Vorgeben eines Eingabegeschwindigkeits-Verweildauer-Profils erreicht werden, bei dem Eingabegeschwindigkeiten, die oberhalb eines Höchstwertes liegen, eine so hohe Verweildauer zugeordnet wird, dass ein Ablauf der Verweildauer praktisch nicht eintreten kann. Dies entspricht im Wesentlichen einem Verhalten, bei dem die Zeitmessung der Verweildauer gar nicht erst beginnt. Eingabegeschwindigkeiten unterhalb des Höchstwertes kann dagegen die übliche Verweildauer zugeordnet werden.

Alternativ kann ein Eingabegeschwindigkeits-Verweildauer-Profil zugrunde gelegt werden, bei dem die jeweiligen Auslöseschwellen (Verweildauern) proportional zur erfassten Eingabegeschwindigkeit gewählt werden, sodass eine höhere Eingabegeschwindigkeit eine längere Verweildauer einer Schaltfläche voraussetzt, bevor diese ausgelöst wird.

Die beschriebene Ausführungsform hilft somit, Fehleingaben zu verhindern, die entstehen, wenn der Anwender seinen Blick mit zu hoher Geschwindigkeit, d.h. unkontrolliert, über die Bildschirmtastatur bewegt.

In einer weiteren Ausführungsform umfasst das Erfassen der mindestens einen Benutzereingabe ein Erfassen eines Bewegungspfads über die Bildschirmtastatur und das Ermitteln von Kontextinformationen umfasst ein kontinuierliches Ermitteln eines aktuellen Eingabepräfixes und zugehörigen Wortvorschlägen während der Eingabe des Bewegungspfads umfasst. Die Wortvorschläge werden dabei über die modifizierte Bildschirmtastatur während der Eingabe des Bewegungspfads bereitgestellt.

Ein Bewegungspfad kann insbesondere als Liste von Blickpositionen auf der Bildschirmtastatur angegeben sein, die in geringen Zeitabständen (beispielsweise alle 10ms) erfasst worden sind.

Die Eingabeart gemäß dieser Ausführungsform ähnelt der "Swipe"-Funktionalität von Touchscreen-Bildschirmtastaturen.

Anders als bei dem bereits beschriebenen Eingabemodus, bei dem ein Anwender die einzelnen Schaltflächen durch Fokussieren der entsprechenden Schaltflächen für eine jeweilige Mindestdauer auslöst, müssen für einen Bewegungspfad die entsprechenden Schaltflächen bzw. Eingaben zunächst aus dem Bewegungspfad ermittelt werden. Im Allgemeinen ist es hierbei nicht ausreichend, die geordnete Liste aller Eingaben zu erzeugen, deren Schaltflächen in dem Bewegungspfad auftreten, da der Anwender auch Schaltflächen "überfliegt", die er nicht anzuwählen beabsichtigt. Insofern kann der ermittelte Eingabepräfix für den Bewegungspfad als eine Liste von Eingaben (z.B. Buchstaben) aufgefasst werden, von denen auf der Grundlage des Bewegungspfads angenommen werden kann, dass der Nutzer sie eingeben wollte.

Vorzugsweise wird diese Ausführungsform mit einer oder mehreren der bereits beschriebenen Ausführungsformen so kombiniert, dass, nachdem ein erster Teil eines Bewegungspfads wie oben beschrieben erkannt worden ist, entsprechende Wortvorschläge innerhalb von Schaltflächen angezeigt werden, die in einem aktuellen Fokusbereich bzw. Blickbereich des Nutzers liegen. Hierbei können sich die Wortvorschläge insbesondere auf die Wörter beziehen, die anhand des Bewegungspfads wahrscheinliche Eingabekandidaten sind.

Mittels dieser Ausführungsform kann eine schnelle Eingabe von Buchstaben auf der Bildschirmtastatur realisiert werden. Im Vergleich zu der herkömmlichen "Swipe"-Funktionalität für Touchscreens, bei dem ein Wortvorschlag erst nach Eingabe des vollständigen Bewegungspfads erzeugt wird, bietet das Anzeigen von Wortvorschlägen im Fokusbereich, d.h. innerhalb der jeweiligen Schaltflächen, und dem kontinuierlichen Erzeugen und Anzeigen von Wortvorschlägen während der Eingabe des Bewegungspfads den Vorteil, dass der Nutzer die Eingabe des Bewegungspfads bereits frühzeitig abbrechen kann, sobald ein zutreffender Wortvorschlag wird.

Die Aufgabe wird ferner gelöst durch ein computerlesbares Speichermedium, welches Instruktionen enthält, die mindestens einen Prozessor dazu veranlassen, das Verfahren wie vorstehend beschrieben zu implementieren, wenn die Instruktionen durch den mindestens einen Prozessor ausgeführt werden.

Im Hinblick auf das computerlesbare Speichermedium ergeben sich ähnliche Vorteile und technische Wirkungen, wie dies in Verbindung mit dem erfindungsgemäßen Verfahren beschrieben wurde.

Die Aufgabe wird ferner gelöst durch eine Vorrichtung, insbesondere zur unterstützten Kommunikation, die das Folgende aufweist:
- einen Tablet-Computer, der dazu ausgebildet ist, eine Bildschirmtastatur anzuzeigen; und
- eine Eyetracking-Kamera, die dazu ausgebildet ist, eine Blickposition bezüglich der Bildschirmtastatur zu erfassen.

Dabei ist der Tablet-Computer dazu ausgebildet, die Blickposition von der Eyetracking-Kamera zu empfangen und das erfindungsgemäße Verfahren wie vorstehend beschrieben auszuführen.

In einer Ausführungsform der erfindungsgemäßen Vorrichtung weist die Vorrichtung ferner mindestens einen der folgenden Sensoren auf: Tonsensor, Bildsensor, GPS-Positionssensor. Die genannten Sensoren können insbesondere dazu verwendet werden, Umgebungsdaten zu erfassen, wie es im Zusammenhang mit der entsprechenden Ausführungsform des erfindungsgemäßen Verfahrens beschrieben worden ist.

Im Hinblick auf die erfindungsgemäße Vorrichtung ergeben sich ähnliche Vorteile und technische Wirkungen, wie dies in Verbindung mit dem erfindungsgemäßen Verfahren beschrieben wurde.

An dieser Stelle sei darauf hingewiesen, dass die Merkmale und die damit jeweils erzielbaren Vorteile, die in Bezug auf das erfindungsgemäße Verfahren beschrieben wurden, auf die erfindungsgemäßen Vorrichtungen anwendbar bzw. übertragbar sind und umgekehrt. Konkret sind die Komponenten der Vorrichtungen im Kontext der vorliegenden Beschreibung der Erfindung dazu ausgebildet, die erfindungsgemäßen Verfahrensschritte durchzuführen. Ebenso sind die Funktionen der oben beschriebenen Komponenten der erfindungsgemäßen Vorrichtungen als Verfahrensschritte des erfindungsgemäßen Verfahrens anwendbar.

Nachfolgend wird die Erfindung anhand von Ausführungsbeispielen beschrieben, die anhand der Abbildungen näher erläutert werden. Hierbei zeigen:
- Figur 1: eine schematische Darstellung einer erfindungsgemäßen Vorrichtung zur unterstützten Kommunikation;
- Figuren 2a - 2e: die Erzeugung von Wortvorschlägen bei Anwendung des erfindungsgemäßen Verfahrens gemäß einem ersten Ausführungsbeispiel;
- Figuren 3a-3c: die Erzeugung von Flexionen als Wortvorschlägen gemäß einem zweiten Ausführungsbeispiel des erfindungsgemäßen Verfahrens;
- Figuren 4a-4b: das Löschen von Buchstaben gemäß einem dritten Ausführungsbeispiel des erfindungsgemäßen Verfahrens; und
- Figuren 5a-5b: die Erzeugung einer zweiten Auslöse-Schaltfläche gemäß einer vierten Ausführungsform des erfindungsgemäßen Verfahrens; und
- Figur 6: die Erzeugung von Wortvorschlägen bei Eingabe eines Bewegungspfads gemäß einer fünften Ausführungsform des erfindungsgemäßen Verfahrens.

In der nachfolgenden Beschreibung werden für gleiche und gleich wirkende Teile dieselben Bezugsziffern verwendet.

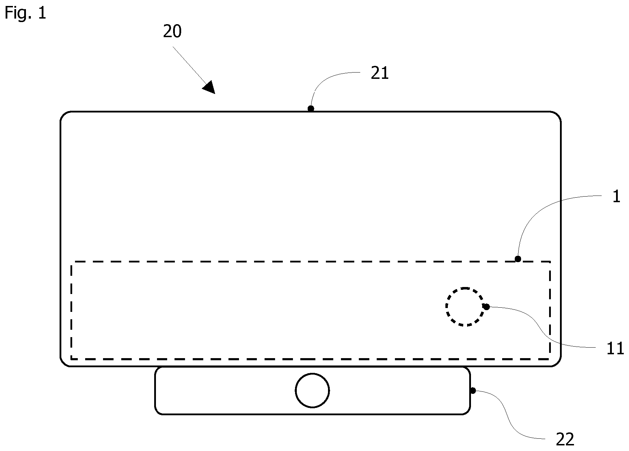

Figur 1 zeigt schematisch eine erfindungsgemäße Vorrichtung 20 zur unterstützten Kommunikation. Die Vorrichtung 20 weist einen Tablet-Computer 21 und eine damit verbundene Eyetracking-Kamera 22 auf.

Bei dem Tablet-Computer 21 kann es sich insbesondere um einen handelsüblichen Tablet-Computer mit berührungsempfindlichem Bildschirm handeln. Ein auf dem Tablet-Computer 21 installiertes Betriebssystem ist dazu ausgebildet, eine Bildschirmtastatur 1 mit einer Vielzahl von Schaltflächen anzuzeigen, mit der insbesondere Buchstaben und andere Zeichen eingegeben oder sonstige Aktionen ausgelöst werden können.

Die Eyetracking-Kamera 22 ist mit dem Tablet-Computer 21 verbunden, beispielsweise über eine USB-C-Schnittstelle, und auf das Gesicht eines Anwenders des Tablet-Computers 21 gerichtet, welches der Bildschirmfläche des Tablet-Computers 21 zugewandt ist. Die Eyetracking-Kamera 22 ist dazu ausgebildet, eine Blickposition 11 des Nutzers auf dem Bildschirm des Tablet-Computers 21 zu erfassen, insbesondere im Bereich der Bildschirmtastatur 1, und dem Tablet-Computer 21 bereitzustellen.

Die Vorrichtung 20 ist dazu ausgebildet, die von der Eyetracking-Kamera 22 bereitgestellte Blickposition 11 einer Position auf dem Bildschirm zuzuordnen, insbesondere einer Schaltfläche der Bildschirmtastatur 1, sodass die Bildschirmtastatur 1 (alternativ oder zusätzlich zur Bedienung über Berühren des Bildschirms) per Augensteuerung bedienbar ist.

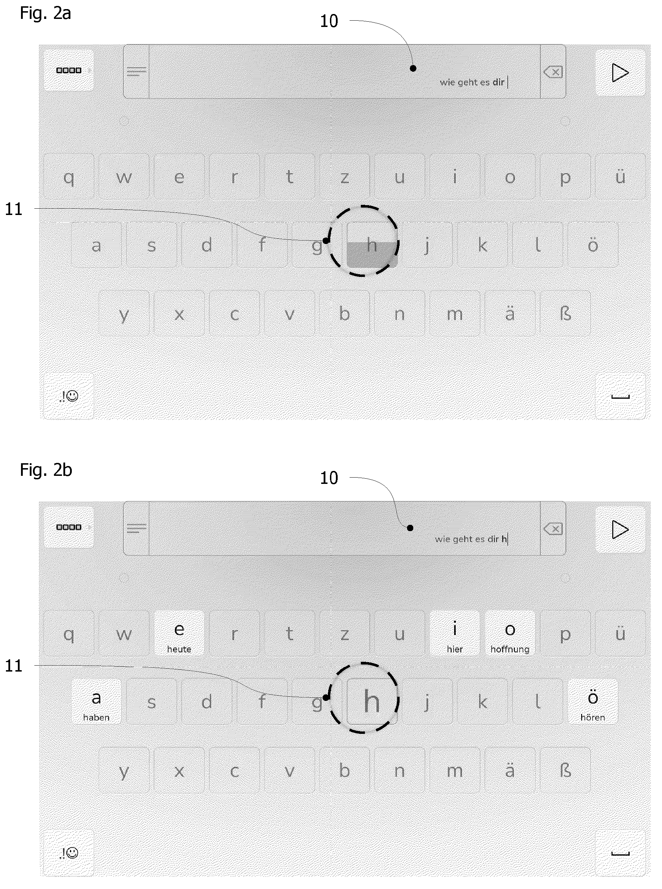

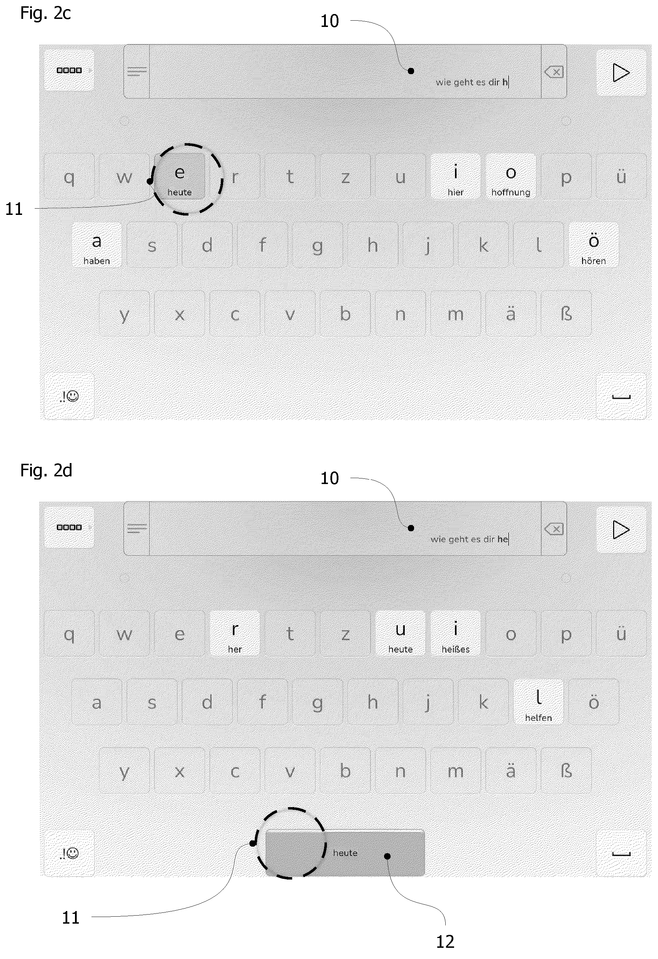

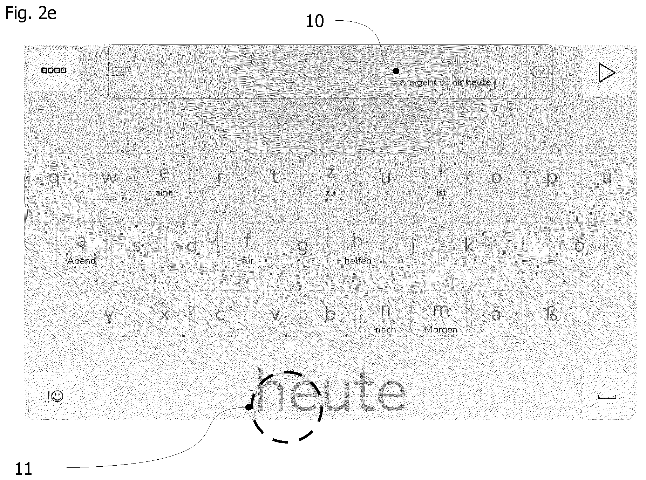

Dabei ist die Vorrichtung 20 ferner dazu ausgebildet, während des Eingabevorgangs eine modifizierte Bildschirmtastatur gemäß dem erfindungsgemäßen Verfahren zu erzeugen und auf dem Bildschirm des Tablet-Computers 21 anzuzeigen, beispielsweise so, wie es nachfolgend in Verbindung mit den Ausführungsbeispielen der Figuren 2 bis 5 erläutert wird. Zu diesem Zweck kann das erfindungsgemäße Verfahren als Softwareapplikation auf dem Tablet-Computer 21 installiert sein.

In den Figuren 2a bis 2e ist ein Bildschirmverlauf dargestellt, bei dem eine modifizierte Bildschirmtastatur mit Wortvorschlägen nach dem erfindungsgemäßen Verfahren gemäß einem ersten Ausführungsbeispiel erzeugt werden.

Die Figuren 2a bis 2e zeigen jeweils eine Bildschirmtastatur einer Vorrichtung, die über Augensteuerung bedienbar ist. Die Bildschirmtastatur weist wie herkömmliche Schaltflächen für die Buchstaben des deutschen Alphabets auf, sowie verschiedene Funktionsschaltflächen. Eine Schaltfläche wird dabei ausgelöst, wenn erkannt wird, dass die Blickposition 11 für mindestens die Dauer eines Auslösungs-Schwellenwerts innerhalb eines Bereichs verweilt, welcher der Schaltfläche zugeordnet ist. Der Anteil der bereits verstrichenen Zeit bis zur Auslösung der Schaltfläche wird dem Anwender dabei über den vertikalen Fortschrittsbalken angezeigt, der innerhalb der fokussierten Schaltfläche angeordnet ist (vgl. Schaltfläche des Buchstabens "h" in Figur 2a). Im oberen Bereich der Bildschirmtastatur ist ein Textfeld 10 angeordnet, in dem die Texteingabe gemäß der bisher eingegebenen Buchstaben angezeigt wird.

Hierbei zeigt Figur 2a einen Zustand, in dem der Anwender zuvor die Buchstabenfolge "wie geht es dir " eingegeben hat und seine aktuelle Blickposition 11 im Bereich der Schaltfläche "h" liegt, um die Buchstabenfolge durch den Buchstaben "h" fortzusetzen.

Figur 2b zeigt die modifizierte Bildschirmtastatur, die erfindungsgemäß unmittelbar nach dem Auslösen der Schaltfläche "h" in Figur 2a erzeugt und dargestellt wird.

Darüber hinaus wurde eine Vielzahl von Wortvorschlägen "heute", "hier", "hoffnung", "haben", "hören" ermittelt, die in der modifizierten Bildschirmtastatur innerhalb der Schaltflächen der jeweiligen Folgebuchstaben "e", "i", "o", "a" und "ö" angezeigt werden. Wie in Figur 2b zu erkennen, werden die Wortvorschläge unmittelbar in den Schaltflächen der Folgebuchstaben angezeigt, sodass sie bereits im (zukünftigen) Fokusbereich des Anwenders angezeigt werden, wenn dieser seine Blickposition 11 von dem Buchstaben "h" löst und die Schaltfläche des gewünschten Folgebuchstabens zur Fortsetzung der Eingabe fokussiert.

Indem jeder Wortvorschlag bereits im Voraus in der entsprechenden Schaltfläche des Folgebuchstabens dargestellt wird, und nicht erst, wenn die Vorrichtung die Fokussierung der Schaltfläche des Folgebuchstabens erkennt, wird eine weitere Verzögerung zusätzlich zu der unvermeidbaren Verzögerung vermieden, die durch die Erfassung der Blickposition 11 durch die Eyetracking-Kamera vorliegt. Auf diese Weise kann die Eingabegeschwindigkeit für den Anwender erhöht werden.

Die Wortvorschläge wurden dabei anhand ihrer statistischen Häufigkeit ermittelt, wobei nicht nur der Eingabepräfix "h", sondern auch die bisherigen Benutzereingaben ("wie geht es dir h") berücksichtigt werden. So wird beispielsweise im Folgebuchstaben "e" der Wortvorschlag "heute" und nicht "hell" angezeigt, da die Wortfolge "wie geht es dir heute" eine höhere statistische Häufigkeit aufweist als die Wortfolge "wie geht es dir hell".

Figuren 2c bis 2e zeigen den weiteren Eingabeverlauf und die entsprechend modifizierten Bildschirmtastaturen ausgehend von dem in Figur 2b dargestellten Zustand. Nachdem, wie in Figur 2c dargestellt, der Anwender seine Blickposition 11 auf die Schaltfläche "e" mit dem Wortvorschlag "heute" gerichtet hat, werden einerseits, wie in Figur 2d dargestellt, eine Auslöseschaltfläche 12 dargestellt. Fokussiert der Anwender die Auslöseschaltfläche 12, wird der Eingabepräfix "wie geht es dir he" gemäß dem Wortvorschlag "heute" zu "wie geht es dir heute" ergänzt (vgl. Textfeld 10 in Figur 2e).

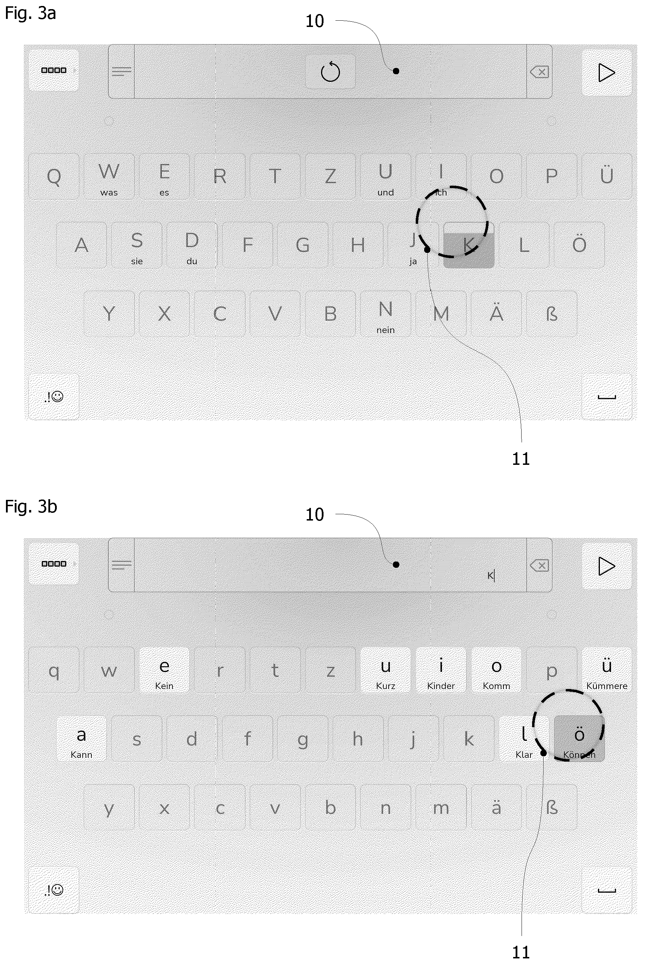

Die Figuren 3a bis 3c zeigen die Erzeugung von Flexionen als Wortvorschlägen gemäß einem zweiten Ausführungsbeispiel des erfindungsgemäßen Verfahrens. Dies erfolgt am Beispiel einer Bildschirmtastatur, wie sie in Verbindung mit dem Ausführungsbeispiel der Figuren 2a bis 2e erläutert wurde.

Hierbei zeigt Figur 3a den Zustand, in dem das Textfeld 10 leer ist und der Anwender die Blickposition 11 auf die Schaltfläche des Buchstabens "k" gerichtet hat, um diesen Buchstaben einzugeben.

Figur 3b zeigt den Zustand, nachdem "k" eingegeben worden ist und im Textfeld 10 steht, wobei Wortvorschläge ("kann", "kein", "können", etc.) in den Folgebuchstaben angezeigt werden, wie es in Verbindung mit dem Ausführungsbeispiel der Figuren 2a bis 2e erläutert worden ist. In Figur 3b hat der Anwender seine Blickposition 11 auf die Schalfläche des Buchstabens "ö" gerichtet, welche den Wortvorschlag "können" enthält.

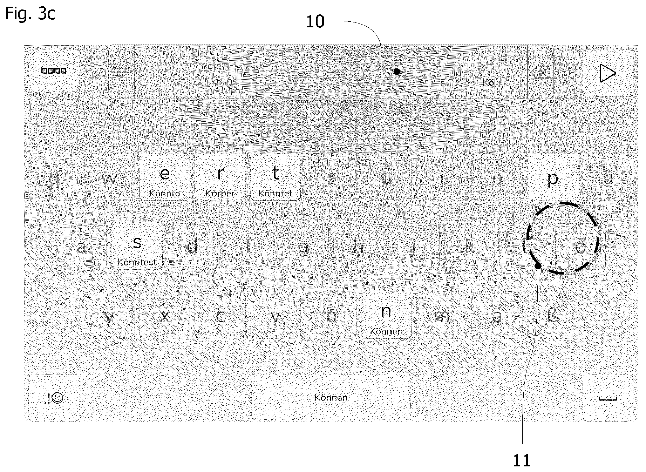

Figur 3c zeigt den Zustand nach Figur 3b, nachdem der Buchstabe "ö" eingegeben worden ist (vgl. "Kö" im Textfeld 10). Hierbei wurde gemäß dem erfindungsgemäßen Verfahren erkannt, dass das Verb "können" flexionsfähig ist, und entsprechende Flexionen als Wortvorschläge erzeugt:
- "Könnte" in der Schaltfläche "e";
- "Könntet" in der Schaltfläche "t";
- "Könntest" in der Schaltfläche "s"; und
- "Können" in der Schaltfläche "n".

Das Akzeptieren der Wortvorschläge durch den Anwender kann dabei so erfolgen, wie es in Verbindung mit den Figuren 2a bis 2e beschrieben worden ist.

Aus Figur 3c ist weiterhin ersichtlich, dass zusätzlich weitere Wortvorschläge erzeugt werden, die nicht auf Flexionen des Wortstamms beruhen (vgl. "Körper" im Folgebuchstaben "r"). Insofern ist das vorliegende Ausführungsbeispiel ohne Weiteres mit dem Ausführungsbeispiel der Figuren 2a bis 2e kombinierbar.

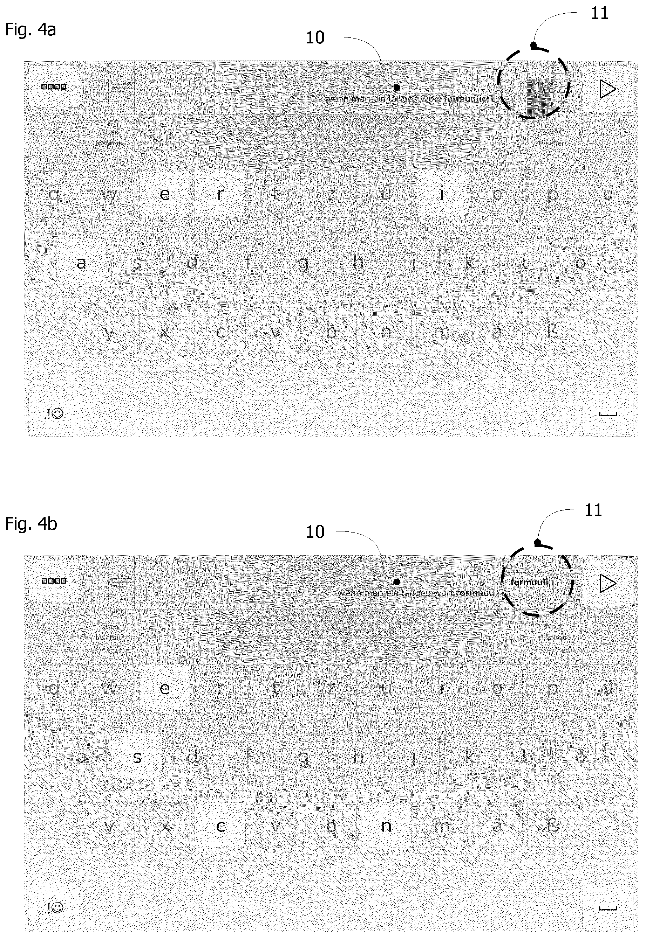

Figuren 4a bis 4b zeigen das Modifizieren der Bildschirmtastatur beim Löschen von Buchstaben gemäß einem dritten Ausführungsbeispiel des erfindungsgemäßen Verfahrens.

So zeigt Figur 4a den Zustand, bei dem der Anwender einen zuvor eingegebenen Text im Textfeld 10 "wenn man ein langes wort formuuliert" korrigieren möchte. Zu diesem Zweck hat der Anwender seine Blickposition 11 auf die Löschen-Schaltfläche der abgebildeten Bildschirmtastatur gerichtet. Auch die Löschen-Schaltfläche wird, wie es für die Buchstaben-Schaltflächen anhand von Figur 2a beschrieben worden ist, erst nach Ablauf einer entsprechenden Verweildauer auf der Schaltfläche ausgelöst, die über den vertikalen Fortschrittsbalken innerhalb der Schaltfläche visualisiert wird.

In Figur 4b ist der Zustand dargestellt, nachdem der Benutzer durch anhaltendes Verweilen seiner Blickposition 11 auf der Löschen-Schaltfläche bereits die Zeichen "t", "r" und "e" vom Ende des eingegebenen Texts gelöscht hat. Die Fortsetzung des Verweilens der Blickposition 11 auf der Löschen-Schaltfläche würde als nächstes für das Löschen des Buchstabens "i" des Wortes bzw. Wortrestes "formuuli" sorgen. Dieses Wort bzw. dieser Wortrest wird innerhalb der Löschen-Schaltfläche, und damit im Bereich der Blickposition 11, angezeigt. Somit ist es für den Anwender nicht erforderlich, seine Blickposition 11 von der Löschen-Schaltfläche abzuwenden und auf das Textfeld 10 zu richten, um zu prüfen, ob das gewünschte Zeichen bereits gelöscht worden ist.

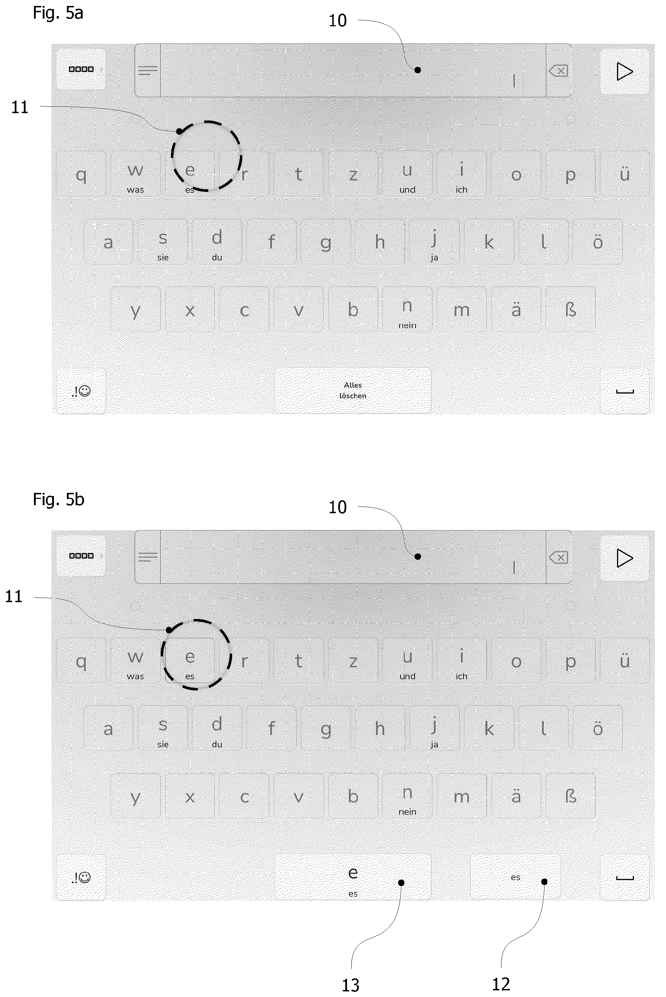

Figuren 5a bis 5b zeigen die Erzeugung einer zweiten Auslösungs-Schaltfläche gemäß eines vierten Ausführungsbeispiels des erfindungsgemäßen Verfahrens.

Insbesondere zeigt Figur 5a einen Zustand, in dem der Anwender seine Blickposition 11 auf die Schaltfläche des Buchstabens "e" gerichtet hat, um diese auszulösen. Sobald die Blickposition 11 für mindestens die Dauer eines Vorauswahl-Schwellenwertes (beispielsweise 200ms, 300ms oder 500ms) auf der Schaltfläche bzw. einem ihr zugeordneten Bereich verharrt ist, wird die Schaltfläche "e" vorausgewählt (ohne, dass sie ausgelöst wird).

Figur 5b zeigt eine erfindungsgemäß erzeugte modifizierte Bildschirmtastatur für die vorausgewählte Schaltfläche "e". Hierbei ist eine Auslöseschaltfläche 13 für den vorausgewählten Buchstaben "e" im unteren Bereich der Bildschirmtastatur angeordnet. Die Auslöseschaltfläche 13 ist dabei deutlich größer als die Schaltfläche des Buchstabens "e", sie weist etwa die dreifache Breite auf. Zusätzlich ist in der modifizierten Bildschirmtastatur eine Auslöseschaltfläche 12 für den Wortvorschlag "es" angeordnet, wie es in Verbindung mit dem Ausführungsbeispiel der Figuren 2a bis 2e beschrieben worden ist.

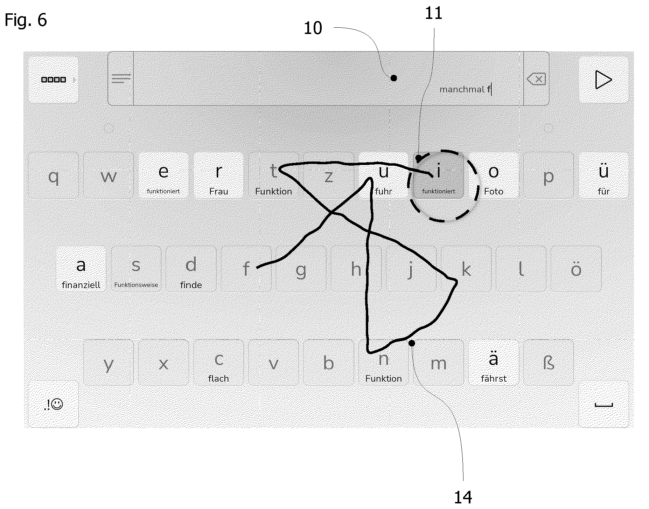

Figur 6 zeigt die Erzeugung von Wortvorschlägen bei Eingabe eines Bewegungspfads gemäß einer fünften Ausführungsform des erfindungsgemäßen Verfahrens.

Gemäß diesem Ausführungsbeispiel findet eine Texteingabe durch Erfassen eines Bewegungspfades über die Bildschirmtastatur statt, ohne, dass dabei die einzelnen Schaltflächen vom Anwender ausgelöst werden, indem sie mindestens für die Dauer eines Auslösungs-Schwellenwertes fokussiert werden.

Der skizzierte Bewegungspfad 14 entspricht dem Blickpositions-Bewegungspfad eines Anwenders, der die Schaltflächen "f", "u", "n", "k", "t" und "i" in der genannten Reihenfolge in einer durchgehenden Bewegung fokussiert. Hierbei werden während des Erfassens des Bewegungspfads 14 kontinuierlich jeweilige Eingabepräfixe ("f", "fu", "fun", "funk", "funkt", "funkti") erfasst und Wortvorschläge erzeugt. Die Wortvorschläge werden innerhalb der Schaltflächen der jeweiligen Folgebuchstaben dargestellt, so, wie es beispielsweise in dem Ausführungsbeispiel der Figuren 1a bis 1e gezeigt ist, und zwar kontinuierlich während der Eingabe des Bewegungspfads.

In dem in Figur 6 gezeigten Zustand enthält die Schaltfläche des Buchstabens "i", auf der die momentane Blickposition 11 des Anwenders liegt, den Wortvorschlag "funktioniert". Der Anwender hat also die Möglichkeit, den Eingabepräfix zu "funktioniert" zu vervollständigen, indem er den Wortvorschlag akzeptiert (beispielsweise durch längeres Verweilen auf der Schaltfläche "i"), ohne, dass er den Bewegungspfad 14 gemäß dem vollständigen Wort über "o", "n", "i", "e", "r", "t" zu Ende führen muss.

An dieser Stelle sei darauf hingewiesen, dass alle oben beschriebenen Teile jeweils für sich - auch ohne im jeweiligen Zusammenhang zusätzlich beschriebene Merkmale, selbst wenn diese nicht explizit als optionale Merkmale im jeweiligen Zusammenhang individuell kenntlich gemacht worden sind, z. B. durch Verwendung von: insbesondere, vorzugsweise, beispielsweise, z. B., ggf., runden Klammern, etc. - und in Kombination oder jeglicher Unterkombination als eigenständige Ausgestaltungen bzw. Weiterbildungen der Erfindung, wie sie insbesondere in der Beschreibungseinleitung sowie den Ansprüchen definiert ist, anzusehen sind. Abweichungen hiervon sind möglich. Konkret sei darauf hingewiesen, dass das Wort insbesondere oder runde Klammern keine im jeweiligen Kontext zwingende Merkmale kennzeichnen.

### Bezugszeichenliste

- 1: Bildschirmtastatur
- 10: Textfeld
- 11: Blickposition
- 12: Auslöseschaltfläche für Wortvorschlag
- 13: Auslöseschaltfläche für vorausgewählten Buchstaben
- 14: Bewegungspfad
- 20: Vorrichtung zur unterstützten Kommunikation
- 21: Tablet-Computer
- 22: Eyetracking-Kamera

## Patentansprüche

1. Verfahren zum Erzeugen einer optimierten Bildschirmtastatur für eine Vorrichtung (20), insbesondere Vorrichtung zur unterstützten Kommunikation, wobei die Vorrichtung dazu ausgebildet ist, eine Bildschirmtastatur (1) anzuzeigen, die durch einen Nutzer mittels Augensteuerung bedienbar ist, wobei das Verfahren die folgenden Schritte aufweist:
a) Anzeigen einer Bildschirmtastatur (1), die eine Vielzahl von Schaltflächen aufweist, auf der Vorrichtung (20);
b) Empfangen mindestens einer Benutzereingabe in Bezug auf die Bildschirmtastatur (1), insbesondere Fokussierung einer Schaltfläche mittels Augensteuerung;
c) Ermitteln von Kontextinformationen, zumindest basierend auf der Benutzereingabe;
d) Erzeugen einer modifizierten Bildschirmtastatur basierend auf den Kontextinformationen,
wobei die modifizierte Bildschirmtastatur mindestens ein modifiziertes Informations- und/oder Aktionselement enthält, das in einem Fokusbereich des Nutzers angeordnet ist; und
e) Anzeigen der modifizierten Bildschirmtastatur auf der Vorrichtung (1).

2. Verfahren nach Anspruch 1,
**dadurch gekennzeichnet, dass**
Schritt c) ein Auswerten eines Eingabepräfixes umfasst, der durch eine Sequenz von vorherigen Benutzereingaben und der Benutzereingabe angegeben ist,
und Schritt d) die folgenden Schritte umfasst:
- Erzeugen von mindestens einem Wortvorschlag basierend auf dem Eingabepräfix;
- Zuordnen des mindestens einen Wortvorschlags zu einer Schaltfläche der Bildschirmtastatur, wobei die Schaltfläche einen Folgebuchstaben in Bezug auf den Eingabepräfix und den Wortvorschlag repräsentiert,
wobei in Schritt d) der mindestens eine Wortvorschlag innerhalb der zugeordneten Schaltfläche dargestellt wird.

3. Verfahren nach einem der vorherigen Ansprüche,
**dadurch gekennzeichnet, dass**
Schritt c) die folgenden Schritte umfasst:
c1) Auswerten eines Wortstamms basierend auf einer Sequenz von vorherigen Benutzereingaben;
c2) Erzeugen von mindestens einem Wortvorschlag, der eine Flexion des Wortstamms angibt, insbesondere hinsichtlich Person, Modus und/oder Genus;
c3) Zuordnen des mindestens einen Wortvorschlags zu einer Schaltfläche der Bildschirmtastatur,
wobei die Schaltfläche einen letzten oder vorletzten Buchstaben des Wortvorschlags repräsentiert,
wobei in Schritt d) der mindestens eine Wortvorschlag innerhalb der zugeordneten Schaltfläche dargestellt wird.

4. Verfahren nach einem der vorherigen Ansprüche,
insbesondere nach einem der Ansprüche 2 oder 3,
**dadurch gekennzeichnet, dass**
das Verfahren ferner die folgenden Schritte umfasst:
- Erfassen, dass der Nutzer mittels Augensteuerung eine Schaltfläche fokussiert, in welcher ein Wortvorschlag angezeigt wird;
- Bereitstellen einer Vervollständigungs-Schaltfläche (12) in der modifizierten Bildschirmtastatur, bevorzugt in einem unteren Bereich davon,
wobei die Vervollständigungs-Schaltfläche (12) den Wortvorschlag darstellt und dazu ausgebildet ist, bei Auswahl den Wortvorschlag zu akzeptieren.

5. Verfahren nach einem der vorherigen Ansprüche,
insbesondere nach einem der Ansprüche 2 bis 4,
**dadurch gekennzeichnet, dass**
- eine Vielzahl von Wortvorschlägen erzeugt wird;
- das Verfahren ferner ein Ermitteln einer Priorität des jeweiligen Wortvorschlags umfasst, wobei die Priorität insbesondere abhängig von einer Verwendungshäufigkeit in einer Sprache und/oder Gesprächssituation ermittelt wird; und
- in einer jeweiligen Schaltfläche, in der ein Wortvorschlag angezeigt wird, derjenige Wortvorschlag angezeigt wird, der die höchste Priorität unter allen Wortvorschlägen besitzt, die der Schaltfläche zugeordnet sind.

6. Verfahren nach einem der vorherigen Ansprüche,
**dadurch gekennzeichnet, dass**
die Benutzereingabe das Fokussieren einer Löschen-Schaltfläche umfasst, und
das Verfahren ferner die folgenden Schritte umfasst:
- Ermitteln eines Wortes, das bei anhaltendem Fokussieren der Löschen-Schaltfläche zumindest teilweise gelöscht werden wird; und
- Anzeigen des Wortes innerhalb der Löschen-Schaltfläche.

7. Verfahren nach einem der vorherigen Ansprüche,
**dadurch gekennzeichnet, dass**
Schritt c) ferner die folgenden Schritte umfasst:
- Erfassen von Umgebungsdaten, insbesondere Sprach-, Bild- und/oder Positionsdaten, von mindestens einem Sensor;
- Zuordnen der Umgebungsdaten zu mindestens einer Umgebung, insbesondere Gesprächskontext, Gesprächspartner und/oder Standort, und Schritt d) das Modifizieren mindestens einer Schaltfläche basierend auf den Umgebungsdaten umfasst.

8. Verfahren nach einem der vorherigen Ansprüche,
insbesondere nach Anspruch 7,
**dadurch gekennzeichnet, dass**
mindestens ein Sprachmodell, insbesondere ein Large Language Model, zum
- Zuordnen der Umgebungsdaten zu mindestens einer Umgebung; und/oder
- Erzeugen von Wortvorschlägen, insbesondere basierend auf der Umgebung,
verwendet wird.

9. Verfahren nach einem der vorherigen Ansprüche,
wobei Schritt c) ein Erfassen einer Verweildauer auf einer ersten Schaltfläche umfasst,
und das Verfahren ferner die folgenden Schritte umfasst:
- Ermitteln, ob die Verweildauer einen Vorauswahl-Schwellenwert überschreitet;
- falls die Verweildauer den Vorauswahl-Schwellenwert überschreitet, Erzeugen der modifizierten Bildschirmtastatur derart, dass diese eine zweite Schaltfläche (13) enthält,
wobei die zweite Schaltfläche (13) dazu konfiguriert ist, eine Aktion auszulösen, die mit der ersten Schaltfläche assoziiert ist, insbesondere die Eingabe eines Buchstabens, der auf der ersten Schaltfläche dargestellt ist, wobei die zweite Schaltfläche (13) größer, vorzugsweise mindestens zwei Mal so groß, wie die erste Schaltfläche ist, und
wobei die zweite Schaltfläche (13) vorzugsweise in einem unteren Bereich der modifizierten Bildschirmtastatur angeordnet ist.

10. Verfahren nach einem der vorherigen Ansprüche,
wobei eine oder mehrere Schaltflächen der Bildschirmtastatur und der modifizierten Bildschirmtastatur durch Fokussierung eines jeweiligen Bereichs ausgelöst werden, der größer als eine sichtbare Begrenzung der Schaltfläche ist, und der die sichtbare Begrenzung umgibt.

11. Verfahren nach einem der vorherigen Ansprüche,
ferner umfassend die folgenden Schritte:
- Erfassen einer Geschwindigkeit, mit welcher sich eine Blickposition des Nutzers über die Bildschirmtastatur bewegt;
- Ändern einer Auslöseschwelle mindestens einer Schaltfläche der modifizierten Bildschirmtastatur basierend auf der Geschwindigkeit, wobei die Auslöseschwelle eine Zeit angibt, für die die Schaltfläche mindestens fokussiert werden muss, um ausgelöst zu werden.

12. Verfahren nach einem der vorherigen Ansprüche,
wobei das Erfassen der mindestens einen Benutzereingabe ein Erfassen eines Bewegungspfads über die Bildschirmtastatur umfasst,
und das Ermitteln von Kontextinformationen ein kontinuierliches Ermitteln eines aktuellen Eingabepräfixes und zugehörigen Wortvorschlägen während der Eingabe des Bewegungspfads umfasst,
und wobei die Wortvorschläge über die modifizierte Bildschirmtastatur während der Eingabe des Bewegungspfads bereitgestellt werden.

13. Computerlesbares Speichermedium, welches Instruktionen enthält, die mindestens einen Prozessor dazu veranlassen, das Verfahren nach einem der vorangehenden Ansprüche zu implementieren, wenn die Instruktionen durch den mindestens einen Prozessor ausgeführt werden.

14. Vorrichtung (20), insbesondere zur unterstützten Kommunikation, die das Folgende aufweist:
- einen Tablet-Computer (21), der dazu ausgebildet ist, eine Bildschirmtastatur (1) anzuzeigen;
- eine Eyetracking-Kamera (22), die dazu ausgebildet ist, eine Blickposition (11) bezüglich der Bildschirmtastatur (1) zu erfassen;
wobei der Tablet-Computer (21) ferner dazu ausgebildet ist, die Blickposition (11) von der Eyetracking-Kamera (21) zu empfangen und das Verfahren nach einem der Ansprüche 1 bis 12 auszuführen.

15. Vorrichtung (20) nach Anspruch 14,
**dadurch gekennzeichnet, dass**
die Vorrichtung (20) ferner mindestens einen der folgenden Sensoren aufweist: Tonsensor, Bildsensor, GPS-Positionssensor.
